# EUROPÄISCHE PATENTSCHRIFT

(11) **EP 1 908 976 B1**
(45) Veröffentlichungstag und Bekanntmachung des Hinweises auf die Patenterteilung: **04.05.2011**
(21) Anmeldenummer: 07018768.7
(22) Anmeldetag: 25.09.2007
(51) Int. Cl.: F16D 13/68, F16D 25/12, F16D 25/0638

(54) **Kupplungsanordnung für ein Fahrzeug**
Clutch device for a vehicle
Dispositif de couplage pour un véhicule

(30) Priorität: 06.10.2006 DE 102006047296
(43) Veröffentlichungstag der Anmeldung: 09.04.2008
(73) Patentinhaber: ZF Friedrichshafen AG, 88038 Friedrichshafen (DE)
(72) Erfinder: Fenn, Peter, 97534 Waigolshausen (DE); Lotze, Rüdiger, 97424 Schweinfurt (DE); Schröder, Arthur, 97456 Hambach (DE); Sudau, Jörg, 97464 Niederwerrn (DE); Struck, Christian, 97422 Schweinfurt (DE)

(56) Entgegenhaltungen:
- EP-A1- 1 422 430
- EP-A2- 1 191 258
- US-A1- 2005 205 373

## Beschreibung

Die vorliegende Erfindung betrifft eine Kupplungsanordnung für ein Fahrzeug, umfassend ein zur gemeinsamen Drehung um eine Drehachse mit einem Antriebsorgan zu koppelndes und mit Arbeitsfluid gefülltes oder füllbares Gehäuse. In diesem Gehäuse ist eine erste Gruppe von Reibelementen mit einem ersten Reibelemententräger drehfest gekoppelt, und eine zweite Gruppe von Reibelementen ist mit einem zweiten Reibelemententräger drehfest gekoppelt. Die Reibelemente der zweiten Gruppe von Reibelementen sind zur Drehmomentübertragung in Reibeingriff mit den Reibelementen der ersten Gruppe von Reibelementen bringbar.

Eine derartige auch als nass laufende Kupplung oder Lamellenkupplung bekannte Kupplungsanordnung ist in der DE 102 034 822 A1 gezeigt. In denjenigen Bereichen, in welchen die verschiedenen Reibelemente mit dem ihnen jeweils zugeordneten Reibelemententräger über Außen- bzw. Innenverzahnungen drehfest gekoppelt sind, sind jeweils Durchtrittsflächen bzw. Kanäle gebildet, durch welche das im Drehmomentübertragungsbetrieb und insbesondere im Schlupfbetrieb die Reibelemente umströmende Fluid hindurch treten kann. Auf diese Art und Weise wird eine Fluidzirkulation im Bereich der reibend miteinander in Wechselwirkung tretenden Oberflächen erzeugt, die für eine schnelle Wärmeabfuhr sorgt.

Eine weitere derartige Kupplungsanordnung wird auch im nächstliegenden Stand der Technik, Dokument US 2005/0205373, offenbart.

Es ist die Aufgabe der vorliegenden Erfindung, eine derartige Kupplungsanordnung so weiterzubilden, dass eine verbesserte Wärmeabfuhr aus dem Bereich der reibend miteinander in Eingriff bringbaren Reibelemente erhalten wird.

Gemäß der vorliegenden Erfindung wird diese Aufgabe gelöst durch eine Kupplungsanordnung für ein Fahrzeug, umfassend ein zur gemeinsamen Drehung um eine Drehachse mit einem Antriebsorgan zu koppelndes und mit Arbeitsfluid gefülltes oder füllbares Gehäuse sowie eine mit einem ersten Reibelemententräger drehfest gekoppelte erste Gruppe von Reibelementen, wobei der erste Reibelemententräger eine Innenverzahnung aufweist und die Reibelemente der ersten Gruppe von Reibelementen eine mit der Innenverzahnung des ersten Reibelemententrägers in Eingriff stehende Außenverzahnung aufweisen, wobei im Bereich dieser in Eingriff miteinander stehenden Verzahnungen ein erster Fluiddurchtritt zwischen dem ersten Reibelemententräger und den Reibelementen der ersten Gruppe von Reibelementen gebildet ist und wobei ein Verhältnis V₁ der Fläche des ersten Fluiddurchtritts zu einer ersten maximalen Durchtrittsfläche im Bereich von 0,3 ≤ V₁ ≤ 0,7 liegt, wobei die erste maximale Durchtrittsfläche bestimmt als eine zwischen einem Fußkreis der Innenverzahnung des ersten Reibelemententrägers und einem Fußkreis der Außenverzahnung der Reibelemente der ersten Gruppe von Reibelementen gebildete Ringfläche, und eine mit einem zweiten Reibelemententräger drehfest gekoppelte zweite Gruppe von Reibelementen, welche zur Drehmomentübertragung in Reibeingriff mit den Reibelementen der ersten Gruppe von Reibelementen bringbar sind, wobei der zweite Reibelemententräger eine Außenverzahnung aufweist und die Reibelemente der zweiten Gruppe von Reibelementen eine mit der Außenverzahnung des zweiten Reibelemententrägers in Eingriff stehende Innenverzahnung aufweisen, wobei im Bereich dieser in Eingriff miteinander stehenden Verzahnungen ein zweiter Fluiddurchtritt zwischen dem zweiten Reibelemententräger und den Reibelementen der zweiten Gruppe von Reibelementen gebildet ist und wobei ein Verhältnis V₂ der Fläche des zweiten Fluiddurchtritts zu einer zweiten maximalen Durchtrittsfläche im Bereich von 0,1 ≤ V₂ ≤ 0,5 liegt, wobei die zweite maximale Durchtrittsfläche bestimmt ist als eine zwischen einem Fußkreis der Außenverzahnung des zweiten Reibelemententrägers und einem Fufkreis der Innenverzahnung der Reibelemente der zweiten Gruppe von Reibelementen gebildete Ringfläche.

Es hat sich gezeigt, dass sowohl für den Bereich, in weichem die Reibelemente der ersten Gruppe von Reibelementen mit dem zugeordneten ersten Reibelemententräger drehfest gekoppelt sind, als auch für den Bereich, in welchem die Reibelemente der zweiten Gruppe von Reibelementen mit dem zweiten Reibelemententräger drehfest gekoppelt sind, jeweils eine Optimierung hinsichtlich der Durchströmbarkeit dadurch erlangt werden kann, dass das jeweilige Verhältnis zwischen der vorgesehenen Fluiddurchtrittsfläche und einer maximal möglichen Durchtrittsfläche für das Fluid in einem bestimmten Wertebereich gewählt wird. Es ist selbstverständlich, dass eine besonders vorteilhafte Optimierung dann erlangt wird, wenn sowohl in Zuordnung zum ersten Reibelemententräger und der ersten Gruppe von Reibelementen als auch in Zuordnung zum zweiten Reibelemententräger und der zweiten Gruppe von Reibelementen ein derartiger optimaler Wert bzw. Wertebereich für das jeweilige Verhältnis angegeben wird. Gleichwohl kann eine verbesserte Wärmeabfuhr auch dann bereits erlangt werden, wenn nur jeweils bei einem dieser in Betracht gezogenen Bereiche diese Optimierung des Flächenverhältnisses erfolgt.

Der erste Reibelemententräger kann zur gemeinsamen Drehung um die Drehachse mit dem Gehäuse ausgebildet sein und kann beispielsweise durch das Gehäuse selbst bereitgestellt sein.

Der zweite Reibelemententräger kann zur gemeinsamen Drehung um die Drehachse mit einer Abtriebsnabe ausgebildet sein, wobei hier zum Bedämpfen von Drehschwingungen vorteilhafterweise die Kopplung zwischen dem zweiten Reibelemententräger und der Abtriebsnabe über eine Torsionsschwingungsdämpferanordnung erfolgt.

Bei der erfindungsgemäßen Kupplungsanordnung kann die Anzahl an Zähnen der Innenverzahnung des ersten Reibelemententrägers größer sein als die Anzahl an Zähnen der Außenverzahnung der Reibeelemente der ersten Gruppe von Reibelementen. Auf diese Art und Weise wird durch das teilweise Weglassen von Zähnen der Außenverzahnung eine Vergrößerung des Fluiddurchtritts erzeugt, um das angestrebte Verhältnis bereitstellen zu können, ohne dass dadurch eine wesentliche Beeinträchtigung der Festigkeit der Drehkopplung eingeführt würde.

In entsprechender Weise kann die Anzahl an Zähnen der Außenverzahnung des zweiten Reibelemententrägers größer sein als die Anzahl an Zähnen der Innenverzahnung der Reibelemente der zweiten Gruppe von Reibelementen.

Um bei gleichwohl stabiler Drehkopplung die verschiedenen optimalen Bereiche für die jeweiligen Flächenverhältnisse vorsehen zu können, wird vorgeschlagen, dass eine radiale Eingriffstiefe der Innenverzahnung des ersten Reibelementenrträgers mit der Außenverzahnung der Reibelemente der ersten Gruppe von Reibelementen geringer ist als eine radiale Eingriffstiefe der Außenverzahnung des zweiten Reibelementenrträgers mit der Innenverzahnung der Reibelemente der zweiten Gruppe von Reibelementen.

Die vorliegende Erfindung wird nachfolgend mit Bezug auf die beiliegenden Zeichnungen detailliert beschrieben. Es zeigt:
- Fig. 1: eine Teil-Längsschnittansicht einer nass laufenden Reibungskupplung;
- Fig. 2: eine Detailansicht der Kopplung von Reibelementen einer zweiten Gruppe von Reibelementen mit einem zugeordneten zweiten Reibelemententräger;
- Fig. 3: eine Detailansicht der Kopplung von Reibelementen einer ersten Gruppe von Reibelementen mit einem zugeordneten ersten Reibelemententräger.

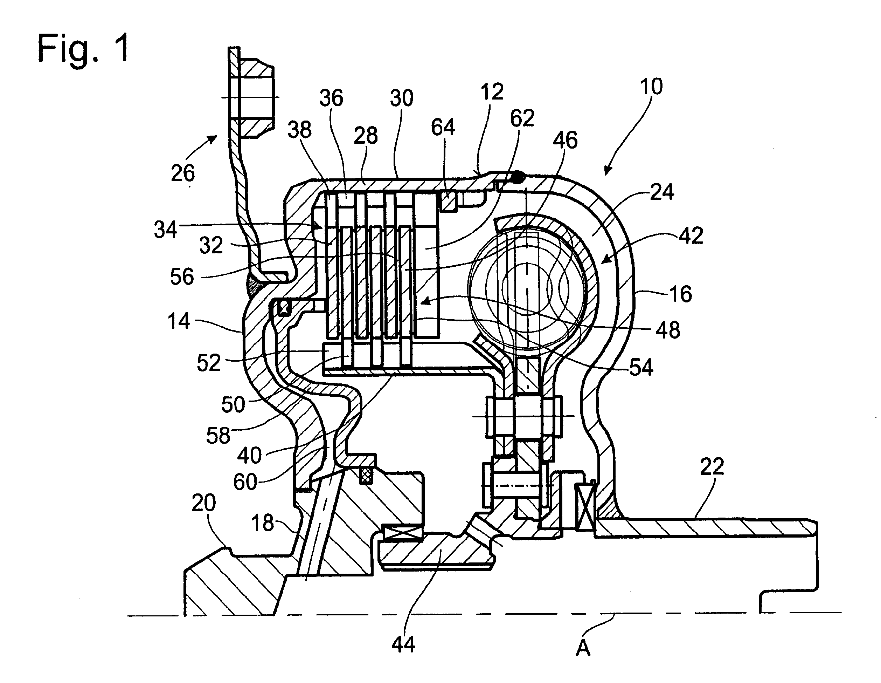

In Fig. 1 ist eine nass laufende Reibungskupplung (allgemein auch nass laufende Lamellenkupplung genannt) mit 10 bezeichnet. Die Kupplung 10 umfasst eine Gehäuseanordnung 12 mit einer motorseitigen Gehäuseschale 14 und einer getriebeseitigen Gehäuseschale 16, die radial außen durch Verschweißung miteinander verbunden sind. Mit der motorseitigen Gehäuseschale 14 ist weiterhin eine Gehäusenabe 18 durch Verschweißung verbunden, welche über einen Lagerzapfen 20 in einer Antriebswelle, beispielsweise einer Kurbelwelle einer Brennkraftmaschine, radial abgestützt werden kann. Mit der getriebeseitigen Gehäuseschale 16 ist eine Antriebsnabe 22 beispielsweise durch Verschweißung fest verbunden, welche in ein Getriebegehäuse ragt und dort eine Fluidpumpe antreibt, um Arbeitsfluid, beispielsweise Öl, in einen Innenraum 24 der Gehäuseanordnung 12 zu fördern.

Weiterhin ist mit der Gehäuseschale 14 eine Verbindungsanordnung 26 fest verbunden, über welche eine Ankopplung an ein Antriebsorgan, also beispielsweise eine Kurbelwelle einer Brennkraftmaschine, erfolgen kann.

Mit einem im Wesentlichen in Richtung einer Drehachse A sich erstreckenden Abschnitt 28 bildet die Gehäuseschale 14 einen ersten Reibelemententräger 30, mit welchem Reibelemente 32 einer ersten Gruppe 34 von Reibelementen drehfest gekoppelt, bezüglich diesem jedoch axial bewegbar sind. Dazu weist der Reibelemententräger 30 eine Innenverzahnung 36 auf, während die Reibelemente 32 der ersten Gruppe 34 jeweils eine Außenverzahnung 38 aufweisen, die mit der Innenverzahnung 36 in Kämmeingriff steht.

Ein zweiter Reibelemententräger 40 ist über eine allgemein mit 42 bezeichnete Torsionsschwingungsdämpferanordnung mit einer Abtriebsnabe 44 gekoppelt und über diese mit einer Abtriebswelle, beispielsweise einer Getriebeeingangswelle, zur gemeinsamen Drehung über die Drehachse A verbindbar. Reibelemente 46 einer zweiten Gruppe 48 von Reibelementen weisen jeweils eine Innenverzahnung 50 auf, über welche diese in Kämmeingriff mit einer Außenverzahnung 52 des zweiten Reibelementenrträgers 40 stehen und mithin mit diesen zur gemeinsamen Drehung um die Drehachse gekoppelt sind, bezüglichen diesem in Richtung der Drehachse A aber verlagerbar sind.

Im dargestellten Falle tragen die Reibelemente 46 der zweiten Gruppe 48 von Reibelementen an beiden axialen Seiten jeweils Reibbeläge 54, 56, während die Reibelemente 32 der ersten Gruppe 34 von Reibelementen keine Reibbeläge aufweisen. Selbstverständlich könnte diese Anordnung umgekehrt sein, oder es könnte vorgesehen sein, dass bei jeder der Gruppen 34 und 48 die Reibelemente 32 bzw. 46 jeweils an einer axialen Seite einen Reibbelag aufweisen.

Ein ringartiges Kolbenelement 58 ist radial außen bezüglich der motorseitigen Gehäuseschale 14 und radial innen bezüglich der Gehäusenabe 18 fluiddicht und axial bewegbar geführt und kann durch Erhöhung des Fluiddrucks in einem Raumbereich 60 in Richtung auf die beiden Gruppen 34, 48 von Reibelementen zu geschoben werden, um diese in Reibeingriff miteinander zu pressen. Die Kraftabstützung erfolgt über eine Widerlagerplatte 62, die mit dem ersten Reibelemententräger 30 drehfest gekoppelt und durch ein Sicherungselement 64 auch axial gesichert ist.

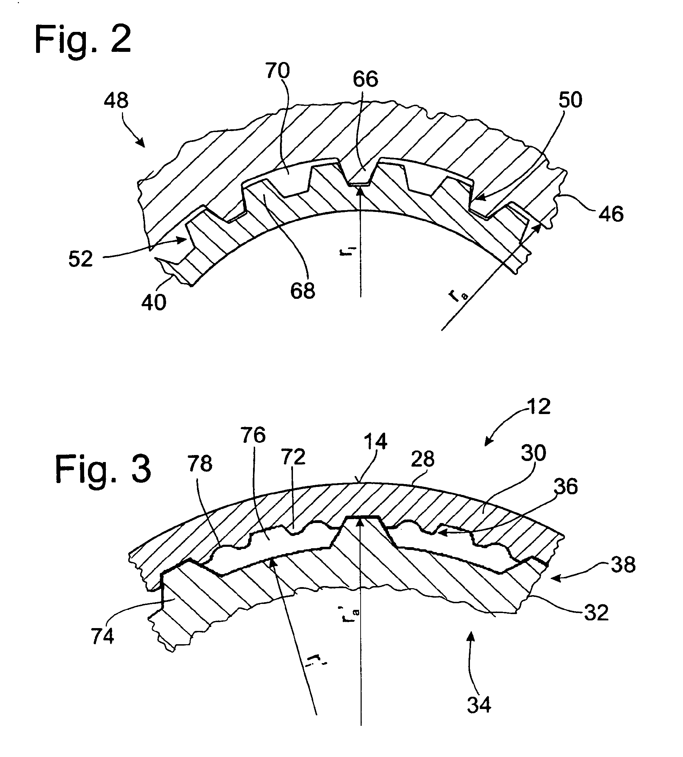

Die Fig. 2 zeigt im Detail denjenigen Bereich, in welchem der zweite Reibelemententräger 40 mit seiner Außenverzahnung 52 im Kämmeingriff steht mit der Innenverzahnung 50 der Reibelemente 46 der zweiten Gruppe von Reibelementen 48. Man erkennt hier zunächst, dass jede der Verzahnungen 50, 52 eine Mehrzahl von in Umfangsrichtung aufeinander folgenden Zähnen 66 bzw. 68 aufweist, die vorzugsweise so in Eingriff miteinander stehen, dass nur ein geringes Drehbewegungsspiel zwischen dem zweiten Reibelemententräger 40 und den Reibelementen 46 besteht. In Zuordnung zu jeder der Verzahnungen 50, 52 bzw. den Zähnen 66, 68 derselben kann ein so genannter Fußkreis definiert werden. Der Fußkreis der Innenverzahnung 50 der Reibelemente 46 ist definiert durch einen Kreis mit dem Radius rₐ, der den radialen Ausgangspunkt bzw. das radial äußere Ende der Zähne 66 definiert. Die radiale Erstreckungslänge der Zähne 66 der Innenverzahnung 50 kann also gemessen werden ausgehend von diesem Fußkreis mit dem Radius rₐ. Entsprechend weist der Fußkreis der Außenverzahnung 52 mit den Zähnen 68 einen Radius rᵢ auf und definiert mithin das radial innere Ende bzw. den radial inneren Ausgangspunkt der Zähne 68 der Außenverzahnung 52. Die beiden Fußkreise definieren eine fiktive bzw. maximal mögliche Durchtrittsfläche zwischen dem zweiten Reibelemententräger 40 und den Reibelementen 46 der zweiten Gruppe von Reibelementen 48, wobei diese Durchtrittsfläche definiert ist als die Ringfläche zwischen den beiden Fußkreisen mit den Durchmessern rₐ und rᵢ. Die tatsächlich erhaltbare Durchtrittsfläche für den Fluiddurchtritt ist tatsächlich jedoch geringer als diese zwischen den beiden Fußkreisen mit den Radien rₐ und rᵢ definierte Ringfläche, da Teilbereiche dieser maximal möglichen Durchtrittsfläche besetzt sind durch die Zähne 66 bzw. 68 der Verzahnungen 50 und 52.

Es hat sich nun gezeigt, dass mit Hinblick auf diese drehfeste Kopplung der Lamellen bzw. Reibelemente 46 der zweiten Gruppe 48 von Reibelementen ein Flächenverhältnis V₂ der Fläche des tatsächlich erhaltenen Fluiddurchtritts 70 in diesem Bereich zu der maximal möglichen Durchtrittsfläche, also der zwischen den Kreisen mit den Radien rₐ und rᵢ gebildeten Ringfläche, im Bereich von 0,1 ≤ V₂ ≤ 0,5 liegt. Bei der Auswahl des Flächenverhältnisses V₂ in diesem Bereich wird bei ausreichend stabiler Drehkopplung eine optimale Durchströmbarkeit in axialer Richtung für das im Bereich der Reibelemente 46 bzw. 32 zirkulierende Fluid gewährleistet.

In Fig. 3 ist der Bereich der Kopplung der Reibelemente 32 der ersten Gruppe 34 von Reibelementen mit dem ersten Reibelemententräger 30, also dem axial sich erstreckenden Abschnitt 28 der motorseitigen Gehäuseschale 14, gezeigt. Auch hier erkennt man, dass die Innenverzahnung 36 des ersten Reibelemententrägers 30 eine Mehrzahl von in Umfangsrichtung aufeinander folgenden Zähnen 72 aufweist, die mit Zähnen 74 der Außenverzahnung 38 der Reibelemente 32 in derartigem Kämmeingriff stehen, dass im Wesentlichen kein Umfangsbewegungsspiel vorhanden ist, bei gleichwohl ermöglichter Axialrelativbewegung.

Auch hier können in Zuordnung zu den Verzahnungen 36 bzw. 38 jeweilige Fußkreise für die Zähne 72 bzw. 74 definiert werden, wobei der Fußkreis der Innenverzahnung 36 des ersten Reibelementenrträgers 30 ein Kreis mit dem Radial rₐ' ist und der Fußkreis der Außenverzahnung 38 der Reibelemente 32 definiert ist durch einen Kreis mit dem Radius rᵢ'. Auch hier ist zwischen den beiden Fußkreisen mit diesen Radien rₐ' und rᵢ' ein ringartiger Flächenbereich definiert, welcher als die theoretische bzw. maximal mögliche Fluiddurchtrittsfläche definiert werden kann. Die tatsächlich vorhandene Fläche für einen Fluiddurchtritt 76 in diesem Bereich ist jedoch auf Grund der jeweils in diese Ringfläche sich radial hinein erstreckenden Zähne 72, 74 kleiner. Hier hat sich ein Flächenverhältnis V₁ zwischen dieser vorhandenen Fläche des Fluiddurchtritts 76 und der maximal möglichen Durchtrittsfläche im Bereich von 0,3 ≤ V₁ ≤ 0,7 als besonders vorteilhaft erwiesen. Man erkennt, dass dieses in einen im Vergleich zum vorangehend mit Bezug auf die Fig. 2 diskutierten Verhältnis V₂ in einen etwas höheren Bereich verschobene Verhältnis V₁ unter anderem dadurch erlangt werden kann, dass die Zähne 72 der Außenverzahnung 36 des ersten Reibelementenrträgers mit radialen Einbuchtungen 78 versehen sind, welche somit eine Vergrößerung der Fläche des Fluiddurchtritts 76 generieren. Ebenso wie bei dem in Fig. 2 erkennbaren Bereich wird das vorzusehende Flächenverhältnis V₁ bzw. V₂ unter anderem auch dadurch erlangt, dass die jeweils im Kämmeingriff mit einander stehenden Verzahnungen 36, 38 bzw. 50, 52 unterschiedliche Anzahlen an Zähnen aufweisen. So ist sowohl radial innen als auch radial außen vorgesehen, dass der jeweilige Reibelementenrträger 30 bzw. 40 eine größere Anzahl an Zähnen aufweist, als die jeweils damit zu koppelnden Reibelemente 32 bzw. 46, beispielsweise die doppelte Anzahl an Zähnen aufweist. Auch die Vorgabe der radialen Erstreckungslänge der jeweiligen Zähne, ausgehend vom jeweiligen Fußkreis, beeinflusst selbstverständlich die Fläche des jeweiligen Fluiddurchtritts 70 bzw. 76, wobei man im Vergleich der Fig. 2 und 3 erkennt, dass die radiale Erstreckungslänge der Zähne 68 der Außenverzahnung 52 des zweiten Reibelemententrägers 40 deutlich größer ist als die radiale Erstreckung der Zähne 72 der Innenverzahnung 36 des ersten Reibelemententrägers 30. Da der in Fig. 3 erkennbare Bereich der Drehkopplung radial deutlich weiter außen liegt, als der in Fig. 2 erkennbare, und mithin in diesem radial weiter außen liegenden Bereich bei näherungsweise gleicher Zahnbeabstandung eine deutlich größere Anzahl an Zähnen in Kämmeingriff miteinander gebracht werden kann, kann die Eingriffstiefe der Verzahnungen ineinander hier geringer gewählt werden, als im Bereich der radial weiter innen in Kämmeingriff stehenden Verzahnungen, welche auch bedingt durch den geringeren Umfang eine geringere Zähneanzahl aufweisen.

## Patentansprüche

1. Kupplungsanordnung für ein Fahrzeug, umfassend ein zur gemeinsamen Drehung um eine Drehachse (A) mit einem Antriebsorgan zu koppelndes und mit Arbeitsfluid gefülltes oder füllbares Gehäuse (12) sowie:
- eine mit einem ersten Reibelemententräger (30) drehfest gekoppelte erste Gruppe (34) von Reibelementen, wobei der erste Reibelemententräger (30) eine Innenverzahnung (36) aufweist und die Reibelemente (32) der ersten Gruppe (34) von Reibelementen eine mit der Innenverzahnung (36) des ersten Reibelemententrägers (30) in Eingriff stehende Außenverzahnung (38) aufweisen, wobei im Bereich dieser in Eingriff miteinander stehenden Verzahnungen (36, 38) ein erster Fluiddurchtritt (76) zwischen dem ersten Reibelemententräger (30) und den Reibelementen (32) der ersten Gruppe (34) von Reibelementen gebildet ist und wobei ein Verhältnis V₁ der Fläche des ersten Fluiddurchtritts (76) zu einer ersten maximalen Durchtrittsfläche im Bereich von 0,3 ≤ V₁ ≤ 0,7 liegt, wobei die erste maximale Durchtrittsfläche bestimmt als eine zwischen einem Fußkreis der Innenverzahnung (36) des ersten Reibelemententrägers (30) und einem Fußkreis der Außenverzahnung (38) der Reibelemente (32) der ersten Gruppe (34) von Reibelementen gebildete Ringfläche, und
- eine mit einem zweiten Reibelemententräger (40) drehfest gekoppelte zweite Gruppe (48) von Reibelementen, welche zur Drehmomentübertragung in Reibeingriff mit den Reibelementen (32) der ersten Gruppe (34) von Reibelementen bringbar sind, wobei der zweite Reibelemententräger (40) eine Außenverzahnung (52) aufweist und die Reibelemente (46) der zweiten Gruppe (48) von Reibelementen eine mit der Außenverzahnung (52) des zweiten Reibelemententrägers (40) in Eingriff stehende Innenverzahnung (50) aufweisen, wobei im Bereich dieser in Eingriff miteinander stehenden Verzahnungen (52, 50) ein zweiter Fluiddurchtritt (70) zwischen dem zweiten Reibelemententräger (40) und den Reibelementen (46) der zweiten Gruppe (48) von Reibelementen gebildet ist und wobei ein Verhältnis V₂ der Fläche des zweiten Fluiddurchtritts (70) zu einer zweiten maximalen Durchtrittsfläche im Bereich von 0,1 ≤ V₂ ≤ 0,5 liegt, wobei die zweite maximale Durchtrittsfläche bestimmt ist als eine zwischen einem Fußkreis der Außenverzahnung (52) des zweiten Reibelemententrägers (40) und einem Fußkreis der Innenverzahnung (50) der Reibelemente (46) der zweiten Gruppe (48) von Reibelementen gebildete Ringfläche.

2. Kupplungsanordnung nach Anspruch 1,
**dadurch gekennzeichnet, dass** der erste Reibelemententräger (30) zur gemeinsamen Drehung um die Drehachse (A) mit dem Gehäuse (12) ausgebildet ist.

3. Kupplungsanordnung nach Anspruch 2,
**dadurch gekennzeichnet, dass** das Gehäuse (12) den ersten Reibelemententräger (30) bereitstellt.

4. Kupplungsanordnung nach einem der Ansprüche 1 bis 3,
**dadurch gekennzeichnet, dass** der zweite Reibelemententräger (40) zur gemeinsamen Drehung um die Drehachse (A) mit einer Abtriebsnabe (44) ausgebildet ist.

5. Kupplungsanordnung nach Anspruch 4,
**dadurch gekennzeichnet, dass** der zweite Reibelemententräger (40) über eine Torsionsschwingungsdämpferanordnung (42) mit der Abtriebsnabe (44) gekoppelt ist.

6. Kupplungsanordnung nach einem der Ansprüche 1 bis 5,
**dadurch gekennzeichnet, dass** die Anzahl an Zähnen (72) der Innenverzahnung (36) des ersten Reibelemententrägers (30) größer ist als die Anzahl an Zähnen (74) der Außenverzahnung (38) der Reibelemente (32) der ersten Gruppe (34) von Reibelementen.

7. Kupplungsanordnung nach einem der Ansprüche 1 bis 6,
**dadurch gekennzeichnet, dass** die Anzahl an Zähnen (68) der Außenverzahnung (52) des zweiten Reibelemententrägers (40) größer ist als die Anzahl an Zähnen (66) der Innenverzahnung (38) der Reibelemente (32) der zweiten Gruppe (34) von Reibelementen.

8. Kupplungsanordnung nach einem der Ansprüche 1 bis 7,
**dadurch gekennzeichnet, dass** eine radiale Eingriffstiefe der Innenverzahnung (36) des ersten Reibelementenrträgers (30) mit der Außenverzahnung (38) der Reibelemente (32) der ersten Gruppe (34) von Reibelementen geringer ist als eine radiale Eingriffstiefe der Außenverzahnung (52) des zweiten Reibelementenrträgers (40) mit der Innenverzahnung (50) der Reibelemente (46) der zweiten Gruppe (48) von Reibelementen.

## Claims

1. Clutch arrangement for a vehicle, comprising a housing (12) which can be coupled to a drive element for conjoint rotation about an axis of rotation (A) and which is or can be filled with working fluid, and:
- a first group (34) of friction elements which is coupled to a first friction element carrier (30) for conjoint rotation therewith, the first friction element carrier (30) having an internal toothing (36) and the friction elements (32) of the first group (34) of friction elements having an external toothing (38) which engages with the internal toothing (36) of the first friction element carrier (30), a first fluid passage (76) being formed between the first friction element carrier (30) and the friction elements (32) of the first group (34) of friction elements in the region of said toothings (36, 38) which are in engagement with one another, and a ratio V₁ of the area of the first fluid passage (76) to a first maximum passage area being in the range from 0.3 ≤ V₁ ≤ 0.7, the first maximum passage area being defined as an annular area formed between a base circle of the internal toothing (36) of the first friction element carrier (30) and a base circle of the external toothing (38) of the friction elements (32) of the first group (34) of friction elements,
and
- a second group (48) of friction elements which is coupled to a second friction element carrier (40) for conjoint rotation therewith and which can be placed in frictional engagement with the friction elements (32) of the first group (34) of friction elements for the purpose of transmitting torque, the second friction element carrier (40) having an external toothing (52) and the friction elements (46) of the second group (48) of friction elements having an internal toothing (50) which engages with the external toothing (52) of the second friction element carrier (40), a second fluid passage (70) being formed between the second friction element carrier (40) and the friction elements (46) of the second group (48) of friction elements in the region of said toothings (52, 50) which are in engagement with one another, and a ratio V₂ of the area of the second fluid passage (70) to a second maximum passage area being in the range from 0.1 ≤ V₂ ≤ 0.5, the second maximum passage area being defined as an annular area formed between a base circle of the external toothing (52) of the second friction element carrier (40) and a base circle of the internal toothing (50) of the friction elements (46) of the second group (48) of friction elements.

2. Clutch arrangement according to Claim 1, **characterized in that** the first friction element carrier (30) is designed to rotate conjointly with the housing (12) about the axis of rotation (A).

3. Clutch arrangement according to Claim 2, **characterized in that** the housing (12) forms the first friction element carrier (30).

4. Clutch arrangement according to one of Claims 1 to 3,
**characterized in that** the second friction element carrier (40) is designed to rotate conjointly with a drive output hub (44) about the axis of rotation (A).

5. Clutch arrangement according to Claim 4,
**characterized in that** the second friction element carrier (40) is coupled to the drive output hub (44) via a torsional vibration damper arrangement (42).

6. Clutch arrangement according to one of Claims 1 to 5,
**characterized in that** the number of teeth (72) of the internal toothing (36) of the first friction element carrier (30) is greater than the number of teeth (74) of the external toothing (38) of the friction elements (32) of the first group (34) of friction elements.

7. Clutch arrangement according to one of Claims 1 to 6,
**characterized in that** the number of teeth (68) of the external toothing (52) of the second friction element carrier (40) is greater than the number of teeth (66) of the internal toothing (38) of the friction elements (32) of the second group (34) of friction elements.

8. Clutch arrangement according to one of Claims 1 to 7,
**characterized in that** a radial engagement depth of the internal toothing (36) of the first friction element carrier (30) with the external toothing (38) of the friction elements (32) of the first group (34) of friction elements is smaller than a radial engagement depth of the external toothing (52) of the second friction element carrier (40) with the internal toothing (50) of the friction elements (46) of the second group (48) of friction elements.

## Revendications

1. Agencement d'embrayage pour un véhicule, comprenant un boîtier (12) rempli ou pouvant être rempli de fluide de travail et devant être accouplé à un organe d'entraînement en vue d'une rotation commune autour d'un axe de rotation (A), ainsi que :
- un premier groupe (34) d'éléments de friction accouplé de manière solidaire en rotation à un premier support d'éléments de friction (30), le premier support d'éléments de friction (30) présentant une denture intérieure (36) et les éléments de friction (32) du premier groupe (34) d'éléments de friction présentant une denture extérieure (38) en prise avec la denture intérieure (36) du premier support d'éléments de friction (30), un premier passage de fluide (76) étant formé dans la région de ces dentures (36, 38) en prise mutuelle entre le premier support d'éléments de friction (30) et les éléments de friction (32) du premier groupe (34) d'éléments de friction et un rapport V₁ de la surface du premier passage de fluide (76) à une première surface de passage maximale étant compris dans la plage de 0,3 ≤ V₁ ≤ 0,7, la première surface de passage maximale étant définie comme une surface annulaire formée entre un cercle de base de la denture intérieure (36) du premier support d'éléments de friction (30) et un cercle de base de la denture extérieure (38) des éléments de friction (32) du premier groupe (34) d'éléments de friction, et
- un deuxième groupe (48) d'éléments de friction accouplé de manière solidaire en rotation à un deuxième support d'éléments de friction (40), lequel peut être amené en prise de friction avec les éléments de friction (32) du premier groupe (34) d'éléments de friction en vue d'assurer un transfert de couple, le deuxième support d'éléments de friction (40) présentant une denture extérieure (52) et les éléments de friction (46) du deuxième groupe (48) d'éléments de friction présentant une denture intérieure (50) en prise avec la denture extérieure (52) du deuxième support d'éléments de friction (40), un deuxième passage de fluide (70) entre le deuxième support d'éléments de friction (40) et les éléments de friction (46) du deuxième groupe (48) d'éléments de friction étant formé dans la région de ces dentures (52, 50) en prise mutuelle et un rapport V₂ de la surface du deuxième passage de fluide (70) à une deuxième surface de passage maximale se situant dans la plage de 0,1 ≤ V₂ ≤ 0,5, la deuxième surface de passage maximale étant définie comme une surface annulaire formée entre un cercle de base de la denture extérieure (52) du deuxième support d'éléments de friction (40) et un cercle de base de la denture intérieure (50) des éléments de friction (46) du deuxième groupe (48) d'éléments de friction.

2. Agencement d'embrayage selon la revendication 1, **caractérisé en ce que** le premier support d'éléments de friction (30) est réalisé en vue de tourner autour de l'axe de rotation (A) conjointement avec le boîtier (12).

3. Agencement d'embrayage selon la revendication 2,
**caractérisé en ce que** le boîtier (12) constitue le premier support d'éléments de friction (30).

4. Agencement d'embrayage selon l'une quelconque des revendications 1 à 3,
**caractérisé en ce que** le deuxième support d'éléments d'embrayage (40) est réalisé en vue de tourner autour de l'axe de rotation (A) conjointement avec un moyeu de prise de force (44).

5. Agencement d'embrayage selon la revendication 4,
**caractérisé en ce que** le deuxième support d'éléments de friction (40) est accouplé au moyeu de prise de force (44) par le biais d'un agencement d'amortisseur d'oscillations de torsion (42).

6. Agencement d'embrayage selon l'une quelconque des revendications 1 à 5,
**caractérisé en ce que** le nombre de dents (72) de la denture intérieure (36) du premier support d'éléments de friction (30) est supérieur au nombre de dents (74) de la denture extérieure (38) des éléments de friction (32) du premier groupe (34) d'éléments de friction.

7. Agencement d'embrayage selon l'une quelconque des revendications 1 à 6,
**caractérisé en ce que** le nombre de dents (68) de la denture extérieure (52) du deuxième support d'éléments de friction (40) est supérieur au nombre de dents (66) de la denture intérieure (38) des éléments de friction (32) du deuxième groupe (34) d'éléments de friction.

8. Agencement d'embrayage selon l'une quelconque des revendications 1 à 7,
**caractérisé en ce qu'**une profondeur d'engagement radiale de la denture intérieure (36) du premier support d'éléments de friction (30) avec la denture extérieure (38) des éléments de friction (32) du premier groupe (34) d'éléments de friction est inférieure à une profondeur d'engagement radiale de la denture extérieure (52) du deuxième support d'éléments de friction (40) avec la denture intérieure (50) des éléments de friction (46) du deuxième groupe (48) d'éléments de friction.
